(19) Europäisches Patentamt
European Patent Office
Office européen des brevets

(11) Publication number: 0 531 575 A1

(12) # EUROPEAN PATENT APPLICATION

(21) Application number: **91115588.5**

(22) Date of filing: **13.09.91**

(51) Int. Cl.5: **B05D 7/16**, C09D 5/08, C09D 201/00, C23C 22/30

(43) Date of publication of application: **17.03.93 Bulletin 93/11**

(84) Designated Contracting States: **BE DE FR GB IT NL**

(71) Applicant: **SUMITOMO METAL INDUSTRIES, LTD.**
**5-33, Kitahama 4-chome Chuo-ku**
**Osaka-Shi Osaka 541(JP)**
Applicant: **NIPPON PAINT CO., LTD.**
**2-1-2, Oyodokita Kita-ku**
**Osaka-shi Osaka 530(JP)**

(72) Inventor: **Yoshikawa, Yukihiro**
**28-7-101 Koshien-cho**
**Nishinomiya-shi, Hyogo-ken(JP)**
Inventor: **Shiota, Toshiaki**
**7-9 Matsugaoka 2-chome**
**Takatsuki-shi, Osaka(JP)**
Inventor: **Takano, Shizuo**
**7-9 Kitasyowa-cho**
**Nishinomiya-shi, Hyogo-ken(JP)**
Inventor: **Usuki, Kazuhiko**
**2-13-26 Tamagawa, Fukushima-ku**
**Osaka-shi, Osaka(JP)**

(74) Representative: **Patentanwälte TER MEER - MÜLLER - STEINMEISTER & PARTNER**
**Mauerkircherstrasse 45**
**W-8000 München 80 (DE)**

(54) **Corrosion-resistant precoated steel sheet suitable for electrodeposition finish coating.**

(57) A precoated steel sheet having good corrosion resistance and coatability by electrodeposition. The precoated steel sheet comprises a zinc- or zinc alloy-plated steel sheet having on the plated surface thereof an undercoat chromate layer and an organic topcoat layer. The topcoat layer is an organic composite coating having a thickness of 0.2 - 6 µm and formed from a coating composition comprising a binder resin formed from one or more monomers at least 25 mole% of which are comprised of an aromatic hydroxy compound, a hydrophilic polyamine and/or polyimine resin or a grafted polyamine and/or polyimine resin, and colloidal silica particles.

FIG. 1

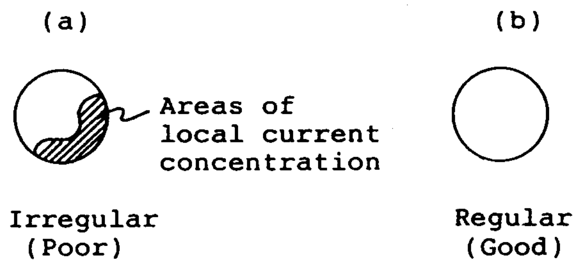


EP 0 531 575 A1

This invention relates to a corrosion-resistant precoated steel sheet which has a chromate undercoat and an organic composite topcoat and which is suitable for electrodeposition finish coating. More particularly, it relates to such a duplex precoated steel sheet which possesses good corrosion resistance and good electrodeposition coatability and which preferably is weldable by means of resistance welding so that it is highly suitable for use in automobile bodies.

Weldable precoated steel sheets which have an organic topcoat layer and which are still capable of being welded by resistance welding are increasingly used in automobile bodies due to their good corrosion resistance in order to prevent the automobile bodies from rusting caused, for example, by salt which is spread on roads for melting snow in snowy areas.

Typical weldable coated steel sheets are Zincrometal (a registered trademark of Diamond Shamrock) and similar precoated steel sheets having a coating of zinc-rich primer. Zincrometal comprises a steel sheet having an undercoat of a zinc-chromate solution (Dacromet, a registered trademark of Diamond Shamrock) and a topcoat of a zinc-rich epoxy resin-based primer (Zincromet, a registered trademark of Diamond Shamrock).

In general, rust-preventing precoated steel sheets for use in automobile bodies are required to have good formability and weldability and good electrodeposition coatability in addition to good corrosion resistance.

Although the above-described conventional weldable precoated steel sheets having a topcoat of a zinc-rich primer possess much better corrosion resistance than cold rolled steel sheets, the corrosion resistance and formability thereof are still unsatisfactory. This is because the topcoat layer of a zinc-rich primer contains a large amount of zinc powder equal to around 50% on a volume basis or approximately 85% to 90% on a weight basis so that it is brittle and tends to be readily peeled off during press forming or other working applied to the precoated steel sheet. The removal of the topcoat by peeling results in a significant loss of corrosion resistance. In addition, the removed flakes of the topcoat readily adhere to the die or punch of the press machine and may cause the formation of flaws or scratches on the coated surface of the sheet. Therefore, the die or punch must be cleaned frequently and the operating efficiency is significantly decreased.

Another disadvantage of the precoated steel sheets of this type is that a coated film of a zinc-rich primer has a relatively large water permeability, and this fact is also responsible for the propensity of its corrosion resistance to decrease. These problems of a zinc-rich primer can be alleviated by decreasing the content of zinc powder in the primer. However, this leads to an increase in electrical resistance of the resulting coated film of the primer, making it difficult or impossible to apply resistance welding to the precoated steel sheet.

In the manufacture of the above-mentioned conventional weldable precoated steel sheets, it is necessary to bake the chromate undercoat at a temperature of 150 - 180 °C and the zinc-rich primer topcoat at a temperature of 250 - 280 °C. When the base steel sheets are of the bake-hardening type, baking at such a high temperature results in a loss of bake-hardenability of the base steel sheets. The term "bake-hardenability" used herein means that the yield stress of a steel can be increased during baking of a finish coating applied, for example, by electrodeposition after press forming.

As an attempt to eliminate the disadvantages caused by use of the zinc-rich primer, some of the present inventors proposed in Japanese Patent Application Kokai (Laid-Open) No. 62-268636(1987) a precoated steel sheet comprising a plated steel sheet having on the plated surface thereof an undercoat of a chromate film formed by coating with an aqueous suspension containing chromic acid and colloidal silica followed by baking and an organic clear topcoat film formed by coating with a polyhydroxypolyether resin which is either free from any pigment or contains a chromate-type pigment followed by baking. Such a precoated steel sheet is capable of resistance welding and has improved corrosion resistance and formability. The baking of the undercoat and topcoat layers can be performed at relatively low temperatures which do not interfere with the bake-hardenability of the base steel so that the resulting precoated steel sheet stably maintains the desired bake-hardenability.

When at least one additive selected from various fillers and crosslinking agents is added to the coating solution from which the topcoat is formed, the corrosion resistance of the above-mentioned precoated steel sheet can be further improved without addition of a chromate-type pigment to the topcoat layer and the topcoat can be formed from a common epoxy resin or a modified epoxy resin as proposed in Japanese Patent Application Kokai No. 1-80522(1989).

Recently the level of electrodeposition coatability of precoated steel sheets required by users such as automobile manufacturers has become steadily higher. The term "electrodeposition coatability" used herein refers to both the adhesion of an electrodeposited finish coating to the precoated steel sheet and the surface smoothness of the finish electrodeposited coating, i.e., being free from gas pinholes, craters, orange

peels, and similar surface defects.

It is described in Japanese Patent Application Kokai No. 62-283161(1987) that an organic composite topcoat film formed from a coating composition comprising an epoxy-containing binder resin, a hydrophilic polyamide resin, and colloidal silica has improved electrodeposition coatability. However, the coating composition is economically disadvantageous for use in the mass production of precoated steel sheets since the hydrophilic polyamide resin itself is expensive and a special, expensive solvent such as N-methyl-2-pyrrolidone or benzyl alcohol must be used to dissolve the epoxy-containing binder resin and the polyamide resin together to form a coating composition. Furthermore, the viscosity of the resulting coating composition is relatively high, leading to difficulties in coating operation.

It is an object of the present invention to provide a highly corrosion-resistant precoated steel sheet which has good electrodeposition coatability and good formability and which preferably is weldable by resistance welding without use of a zinc-rich primer.

It is another object of the invention to provide such a precoated steel sheet which can be manufactured relatively inexpensively without use of an expensive organic solvent.

It has been found that these and other objects can be accomplished by an organic composite coating formed from a combination of a particular, substantially epoxy-free binder resin and a hydrophilic polyamine and/or polyimine resin having a high density of amino and/or imino groups or a graft polymer of such polyamine and/or polyimine resin onto the binder resin or its compatible resin.

The present invention provides a precoated steel sheet having good corrosion resistance and electrodeposition coatability, which comprises a zinc- or zinc alloy-plated steel sheet having on the plated surface on one or both sides of the steel sheet an undercoat chromate layer and an organic topcoat layer, wherein the topcoat layer is a dry film of an organic composite coating having a thickness of 0.2 - 6 $\mu$m and formed from a coating composition comprising the following components A, B, and C in an organic solvent:

A. 100 parts by weight of an organic solvent-soluble binder resin having a number-average molecular weight of 600 - 100,000 and formed from one or more monomers at least 25 mole% of which are comprised of an aromatic hydroxy compound,

B. a hydrophilic resin having a number-average molecular weight of 600 - 100,000 which is either (i) from 10 to 150 parts by weight of a hydrophilic polyamine and/or polyimine resin formed from one or more monomers at least 25 mole% of which are comprised of an amine compound, or (ii) an amount of a grafted polyamine and/or polyimine resin which is a graft polymer of a hydrophilic polyamine and/or polyimine resin (i) onto a binder resin (A) or other resin which is compatible with a binder resin (A), the amount of the grafted resin being in the range of from 10 to 150 parts by weight multiplied by the quotient of the total weight of the grafted resin divided by the weight of the polyamine and/or polyimine resin moieties in the grafted resin; and

C. from 5 to 150 parts by weight of silica particles having an average primary particle diameter of 1 - 100 nm. Figures 1(a) and 1(b) schematically show a poor indentation and a good indentation, respectively, formed by spot resistance
welding.

The precoated steel sheet of the present invention has improved electrodeposition coatability due to the presence of a specific amount of hydrophilic polyamine and/or polyimine resin in the coating composition used to form an organic topcoat layer. It is believed that the incorporation of the hydrophilic resin results in the formation of an organic topcoat layer having an increased hydrophilic nature, which enables an electrodeposition coating composition to penetrate into the topcoat layer more uniformly and completely. As a result, electrodeposition coating can be performed with more uniform current distribution, thereby resulting in the formation of a uniform electrodeposited coating.

The incorporation of a hydrophilic resin in a resin coating generally tends to decrease the water resistance of the coating. However, according to the present invention, the use of a specific binder resin can enable the formation of a water-resisting coating of good durability despite the presence of a hydrophilic resin.

In addition to the use of the highly durable binder resin, the incorporation of silica particles in the topcoat layer serves to further improve the corrosion preventing properties of the coating.

In general, it is necessary to use a very limited and expensive solvent in order to dissolve a hydrophilic resin and a binder resin together. Furthermore, the viscosity of the resulting solution is normally increased significantly by the addition of silica particles. However, the optionally grafted polyamine and/or polyimine resin used in the present invention makes it possible to use an inexpensive common organic solvent for coating compositions to dissolve it along with the binder resin without a significant increase in viscosity by the addition of silica particles.

The present invention will be described below with respect to each of the constitutive elements, i.e., base steel sheet, undercoat chromate layer, and topcoat silica-containing organic composite layer.

Base Plated Steel Sheet

The base material of the precoated steel sheet of the present invention is a steel sheet plated with zinc or a zinc-based alloy. The plating of the steel sheet may be performed by hot dipping, electroplating, or electroless plating. Examples of useful base sheets include electroplated steel sheet having a plating layer of zinc or zinc-based alloy, e.g., Zn-Ni or Zn-Fe, galvanized steel sheet, and alloyed galvanized steel sheet. The base steel sheet may be of the duplex plating type having two or more plating layers as long as at least one of the plating layers is comprised of zinc or a zinc-based alloy.

The coating weight of the zinc or zinc-based alloy plating is preferably in the range of 10 - 100 g/$m^2$ and more preferably 20 - 60 g/$m^2$. Also, it is preferable that the steel sheet to be plated be of the bake-hardening type, since the yield stress and hence the mechanical strength of the steel sheet can be increased during baking of a finish electrodeposited coating applied to the precoated steel sheet.

Undercoat Chromate Layer

A chromate layer is formed on the plated surface of the base steel sheet. It is preferable that the chromate layer have a coating weight of 5 - 500 mg/$m^2$ as Cr. A higher coating weight of the chromate layer decreases the formability and weldability of the precoated steel sheet, while a sufficient corrosion resistance cannot be obtained with a lower coating weight. More preferably, the coating weight of the chromate layer is 20 - 100 mg/$m^2$ as Cr.

The chromate layer may be formed by use of any conventional chromating solution including those of the conversion type, no-rinse type, and electrolytic type. However, it is most preferable to use a no-rinse type chromating solution since it is most effective for improving the corrosion resistance of the precoated steel sheet.

Using a no-rinse type chromating solution, a chromate film is formed by reduction of hexavalent chromium ($Cr^{6+}$) and evaporation of water. In order to perform the reduction and film formation efficiently at a low baking temperature, it is preferable to employ the two-stage reducing method in which a chromating solution is previously reduced partially as a first reduction stage prior to coating and the hexavalent chromium remaining in the chromate coating formed from the partially-reduced chromating solution is finally reduced during baking of the coating. According to this method, the amount of hexavalent chromium to be reduced during baking is decreased, thereby accelerating the formation of the desired chromate film.

The ratio of partial reduction of hexavalent chromium in the first stage reduction is preferably in the range of 0.4 - 0.6 as expressed by the ratio of $Cr^{3+}$/total Cr [ = $Cr^{3+}/(Cr^{3+} + Cr^{6+})$]. If this ratio is less than 0.4, the reduction efficiency will become poor in the second stage reduction. If it is greater than 0.6, the stability of the chromating solution will be impaired due to the presence of a large amount of $Cr^{3+}$ ions therein. The reducing agent used in the first stage reduction is not critical and may be selected from polyhydric alcohols, polycarboxlic acids, and hydroxycarboxylic acids as exemplified below with respect to reducing agents useful for the second stage reduction. A commercially available partially-reduced chromating solution may also be used.

Various additives may be added to the chromating solution in accordance with conventional practice.

A silane coupling agent is one example of a useful additive to chromating solutions and it serves to strengthen the resulting chromate film by hydrolysis to form a polysiloxane network, thereby improving the adhesion of the chromate film to the overlaid topcoating. It is also advantageous in that hydrolysis of the silane coupling agent liberates an alcohol, which serves as a reducing agent for hexavalent chromium remaining in the chromating solution.

Examples of useful silane coupling agents include vinyltriethoxysilane, vinyl-tris($\beta$-methoxyethoxy)silane, $\gamma$-methacryloxypropyltrimethoxysilane, $\gamma$-glycidoxypropyltrimethoxysilane, and the like.

When used, a silane coupling agent is preferably added in such an amount that the molar ratio of silane to unreduced hexavalent chromium in the chromating solution is at least 0.01 and preferably in the range of 0.01 - 2 since addition of a lesser amount of a silane coupling agent has little effect. However, addition of an excessively large amount thereof is not only disadvantageous from an economic viewpoint but may result in a decrease in electrodeposition coatability and corrosion resistance of the precoated steel sheet.

Other useful additives to a chromating solution include phosphoric acid, iron phosphide powder, and colloidal silica. Phosphoric acid may be added in an amount at most equimolar to the total chromium oxides ($Cr^{3+} + Cr^{6+}$) in order to improve the corrosion resistance. Addition of iron phosphide powder and/or

colloidal silica is effective for improvement in corrosion resistance and electrodeposition coatability. Iron phosphide may be added in such an amount that the weight ratio of iron phosphide to total chromium oxides is in the range of 0.1 - 20 and preferably 1 - 10, while colloidal silica may be added in such an amount that the weight ratio of silica to total chromium oxides is in the range of 0.1 - 4 and preferably 0.3 - 3. Preferably, the average particle diameter of iron phosphide is within the range of 0.5 - 5 μm and that of colloidal silica is within the range of 5 - 100 nm.

The partially-reduced chromating solution to which various additives as above have optionally been added is applied to a base plated steel sheet after an additional reducing agent is added to the solution for the second stage reduction during baking. The amount of reducing agent added at this time is preferably from one to four times the stoichiometric amount required to reduce the remaining unreduced $Cr^{6+}$ ions. If it is less than the stoichiometric amount, the resulting chromate film may have insufficient resistance to corrosion and to dissolution of chromium. If a reducing agent is added in an amount more than four times the stoichiometric amount, no further improvement can be obtained and the reducing agent may remain in the baked chromate film, thereby degrading the corrosion resistance thereof.

Examples of suitable reducing agents which can be used in the first and second reduction stages include polyhydric alcohols such as ethylene glycol, propylene glycol, and glycerol; polycarboxylic acids such as succinic acid, glutaric acid, and adipic acid; and hydroxycarboxylic acids such as citric acid and lactic acid.

The addition of a reducing agent for the second stage reduction is performed most preferably immediately and at the earliest a few days before the partially-reduced chromating solution is applied, since the solution is highly susceptible to gelation after an additional reducing agent is added thereto.

The chromating solution can be applied by any conventional coating technique such as roll coating, bar coating, spraying, and immersing. The wet chromate coating thus applied can be dried by baking at a temperature in the range of 60 - 200 °C and preferably 100 - 150 °C to form a chromate film. Baking at a temperature above 200 °C may impair the bake-hardenability of the base steel sheet, if it is of the bake-hardening type.

## Organic Topcoat Layer

The chromate film formed on the base plated steel sheet in the above-described manner is overlaid with an organic topcoat layer of 0.2 - 6 μm thickness formed from a coating composition comprising three components: (A) a binder resin, (B) a hydrophilic resin, and (C) silica particles in an organic solvent. Thus, the organic topcoat layer is a composite coating which contains inorganic silica particles dispersed in an organic resin matrix.

### (A) Binder Resin:

The binder resin component (A) is an organic solvent-soluble resin having a number-average molecular weight of 600 - 100,000 and preferably 1,000 - 50,000 and formed from one or more monomers, at least 25 mole% and preferably 30 - 50 mole% of which are comprised of an aromatic hydroxy compound. The remaining portion, i.e., from 0 to 75 mole% of the monomers may comprise one or more monomers selected from those monomers commonly used in coating compositions, such as epihalohydrins, dicarboxylic acids, polyisocyanates, formaldehyde, and amines. One or more of such binder resins can be used.

The aromatic hydroxy compound includes monohydric and polyhydric phenols, bisphenols, and their derivatives. Specific examples of useful aromatic hydroxy compounds are monohydric phenols such as phenol, cresols, thymol, and vinylphenols; dihydric phenols such as catechol, resorcinol, hydroquinone, and orcinol; trihydric phenols such as pyrogallol and hydroxyhydroquinone; and bisphenols such as bisphenol A and bisphenol AD.

The binder resin component (A) used is not reactive with the hydrophilic polyamine and/or polyimine resin component (B). Therefore, when the binder resin is based on an epoxy resin prepared by reacting the aromatic hydroxy compound with an epihalohydrin, the resin should be modified such that it is substantially free from epoxy groups. If the binder resin contains epoxy groups, it will react with the polyamine and/or polyimine resin and cannot provide a coating composition having satisfactory application properties.

The following are non-limiting examples of useful binder resin components (A).

A1) Substantially epoxy-free epoxy-amine resins prepared by reacting a bisphenol- and/or resorcinol-based epoxy resin with a secondary amine which may be selected from dialkylamines, dialkanolamines, and alkylalkanolamines.

A2) Substantially epoxy-free epoxy-ester resins prepared by reacting a bisphenol- and/or resorcinol-based epoxy resin with an aliphatic or aromatic dicarboxylic acid in the presence or absence of an amine catalyst. Preferably the dicarboxylic acid is an alkylene dicarboxylic acid and most preferably azelaic acid. A polycarboxylic acid having a tri- or higher-functionality can be used along with the dicarboxylic acid.

A3) Urethane resins prepared by reacting one or more resins (A1) and/or (A2) which contain primary hydroxyl groups with a partially-blocked polyisocyanate. The primary hydroxyl groups of the resin (A1) or (A2) are introduced by using an alkanolamine having a primary hydroxyl group as a reactant or catalyst in the preparation of the resin. The isocyanate is preferably an aliphatic or alicyclic diisocyanate which has been partially blocked with a conventional isocyanate blocking agent.

A4) Polyphenoxy resins which are substantially epoxy-free resins normally having a number-average molecular weight of from 8,000 to 100,000 and prepared by polycondensation of an aromatic hydroxy compound with an almost equivalent amount of an epihalohydrin in the presence of an alkali catalyst.

A5) Novolac phenolic resins prepared by polycondensation of a phenol with an aldehyde in the presence of an acid catalyst.

A6) Polyalkenylphenolic resins which can be prepared from a monomer or monomer mixture comprising at least 25 mole% of an alkenylphenol such as vinylphenol, dimethylvinylphenol, isopropenylphenol, or isobutenylphenol and up to 75 mole% of other $\alpha,\beta$-ethylenically unsaturated monomer by means of various polymerization techniques including thermal polymerization, free-radical polymerization, and cationic polymerization.

Of the above-described binder resins, resins (A1) to (A3) are preferred and particularly the urethane resins (A3) are preferable since the resulting dry organic coating layer is improved in adhesion.

When the aromatic hydroxy compound comprises less than 25 mole% of the monomer mixture from which the binder resin (A) is formed, the resulting organic topcoat layer does not have good resistance to water, corrosion, or chemicals. It is also the case when the number-average molecular weight of the binder resin (A) is less than 600. On the other hand, when it is greater than 100,000, the resin has a decreased solubility in an organic solvent or the resulting coating composition has an increased viscosity, thereby impairing coating operation therewith.

(B) Hydrophilic Resin:

The hydrophilic resin component (B) also has a number-average molecular weight of from 600 to 100,000 and is either (i) a polyamine and/or polyimine resin formed from one or more monomers, at least 25 mole% of which are comprised of an amine compound, or (ii) a grafted polyamine and/or polyimine resin which is a graft polymer of a polyamine and/or polyimine resin as described in (i) onto a binder resin as described in (A) or other resin which is compatible with a binder resin (A). One or more of these hydrophilic resins can be used. The polyamine and/or polyimine resin is substantially free from acid amide or imide linkages.

The amine compound which comprises at least 25 mole% and preferably 40 - 100% of the monomers from which the hydrophilic resin (B) is formed include aliphatic, aromatic, alicyclic, and heterocyclic primary, secondary, and tertiary amines and quaternary ammonium compounds. These amine compounds may be incorporated either in the polymer backbone of the resin or as pendant groups or in side chains attached to the polymer backbone. The remaining portion of the monomers which comprises up to 70 mole% of the hydrophilic polyamine and/or polyimine resin may be selected from $\alpha,\beta$-ethylenically unsaturated compounds, epoxy compounds, isocyanates, and similar compounds.

The following are non-limiting examples of useful hydrophilic resins (B).

B1) Copolymeric acrylic resins prepared by a mixture of monomers comprising at least 25 mole% of an amino-containing acrylic or vinyl monomer. Examples of the amino-containing monomer include dialkylaminoalkyl acrylates or methacrylates, and vinylpyridines. The copolymeric acrylic resins can be prepared by polymerization of one or more of these monomers optionally with other one or more monomers.

B2) Resins prepared by reaction of a polyfunctional epoxy compound and a primary or secondary amine which comprises at least 25 mole% of the monomer or monomers. The polyfunctional epoxy compound may be a polyfunctional epoxy resin such as a resin obtained by reacting a polyol polyglycidyl ether, e.g., glycerol polyglycidyl ether, with a polyisocyanate, e.g., isophorone diisocyanate or a resin obtained by polymerization of an $\alpha,\beta$-ethylenically unsaturated glycidyl ester monomer such as glycidyl methacrylate. The primary or secondary amine may be an aliphatic or heterocyclic amine.

B3) Polyethyleneimines which are polymers of ethyleneimine.

B4) Grafted polyamines and/or polyimines obtained by graft polymerization of the polyamine and/or polyimine resins (B1) to (B3) onto the binder resin (A) described above or other resin which is compatible with the binder resin (A).

The hydrophilic resin (B) is incorporated in the coating composition in such an amount that from 10 to 150 parts and preferably 10 to 60 parts by weight of the hydrophilic polyamine and/or polyimine resin is present for each 100 parts by weight of the binder resin (A). When the hydrophilic resin (B) is a grafted polyamine and/or polyimine resin, the amount of the grafted resin be determined such that the polyamine and/or polyimine moieties of the grafted resin is present in an amount in the above-described range. Thus, the amount of the grafted resin is in the range of from 10 to 150 parts by weight multiplied by the quotient of the total weight of the grafted resin divided by the weight of the polyamine and/or polyimine resin moieties in the grafted resin.

By incorporation of the hydrophilic resin in the binder resin film, an electrodeposition coating composition can be rapidly penetrated into the resin film during finish electrodeposition coating of the resulting precoated steel sheet, thereby decreasing the electrical resistance of the resin film and contributing to the formation of a uniform electrodeposited coating having good adhesion.

These desirable effects on electrodeposition coatability cannot be achieved sufficiently when the proportion of the amine compound in the monomer reactant(s) used in the preparation of the hydrophilic resin (B) is less than 25 mole%, or when the amount of the hydrophilic resin (B) (or, if it is the grafted resin, the amount of the polyamine and/or polyimine moieties of the grafted resin) is less than 10 parts by weight for each 100 parts by weight of the binder resin (A). When more than 150 parts by weight of the hydrophilic resin (B) are present for each 100 parts by weight of the binder resin (A), the adhesion of a finish electrodeposited coating is degraded.

The hydrophilic resin has a number-average molecular weight in the range of 600 - 100,000 and preferably 1,000 - 50,000. When it has a molecular weight of less than 600, the resistance to water and corrosion of the resulting organic topcoat layer is decreased. A hydrophilic resin having a molecular weight exceeding 100,000 has a decreased solubility in an organic solvent and makes it difficult to prepare a uniform coating composition.

Of the above-described hydrophilic resins, those polyamine or polyimine resins having amino or imino groups in side chains and the grafted polyamine and/or polyimine resins are preferable for the purpose of the present invention since they are soluble in common organic solvents for use in coating and can be used to prepare a low viscosity coating composition with good application properties at low costs even in the presence of a relatively large amount of silica particles (C).

(C) Silica Particles:

The coating composition used in the present invention further contains silica fine particles having an average primary particle diameter of 1 - 100 nm (=millimicrons), which are added for improvement in corrosion resistance and electrodeposition coatability. If the average primary particle diameter of silica is less than 1 nm, the resulting organic coating tends to have a decreased alkali resistance. If it is greater than 100 nm, the resulting organic coating is provided with no significant improvement in corrosion resistance and its surface flatness is lost. Preferably the average primary particle diameter of silica particles is within the range of 5 - 50 nm.

The silica particles (C) are added in an amount in the range of 5 - 150 parts and preferably 20 - 110 parts by weight for each 100 parts by weight of the binder resin (A). An amount of less than 5 parts by weight of silica particles does not provide a significant improvement in corrosion resistance while an amount of more than 150 parts by weight thereof results in a decrease in formability and weldability of the precoated steel sheet.

Useful silica particles include fumed silica and aqueous colloidal silica. Aqueous colloidal silica usually contains ammonium or alkali metal ions for colloid stabilization and these ions tend to decrease the corrosion resistance of the resulting organic composite coating. Therefore, it is preferable to use fumed silica prepared by a vapor-phase thermal decomposition method.

In addition to the above-described Components (A), (B), and (C), one or more of the following components may be incorporated in the coating composition used to form a topcoat layer, if desired.

Lubricant:

A lubricant may be added to the coating composition in an amount of not more than 20 parts and preferably not more than 10 parts by weight per 100 parts by weight of the binder resin (A) in order to

further improve the formability of the precoated steel sheet. Examples of useful lubricants include organic lubricants such as polyolefins, carboxylate esters, carboxylate metal salts, and polyalkylene glycols; inorganic lubricants such as molybdenum sulfide, and resinous lubricants such as silicone resins and fluorocarbon resins. A particularly preferable lubricant is a polyethylene wax having a density of at least 0.94, a molecular weight of 1,000 - 10,000, and an acid value of not greater than 15 KOH mg/g. Addition of a lubricant in an amount in excess of 20 parts by weight per 100 parts by weight of resin (A) is not preferable since it causes an electrodeposited finish coating to have decreased adhesion.

Curing Agent:

In order to accelerate drying and baking of the coating, a curing agent which is used in conventional coating compositions may be added in an amount of 1 - 100 parts and preferably 10 - 60 parts by weight per 100 parts by weight of the binder resin (A). Examples of useful curing agents include melamine resins, resol-type phenolic resins, and polyisocyanates. Particularly preferred are resol-type phenolic resins having the following formula:

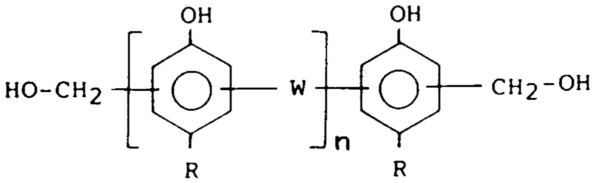

wherein n is a value of 0 to 4, W is $-CH_2-$ or $-CH_2-O-CH_2-$, R is H, $-CH_3$ or a residue of a resol of the formula

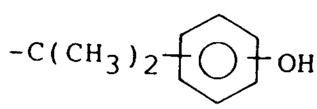
.

Other additives:

If desired, other various additives which are used in conventional coating compositions may be added to the coating composition used to form a topcoat layer. These additives include rust-preventing pigments such as chromate pigments, and particularly low-solubility chromates, e.g., zinc chromate, lead chromate, and barium chromate, phosphate pigments, and plumbate pigments; extender pigments such as carbonate pigments and silicate pigments; color pigments such as iron oxide, titanium oxide, and carbon black; rust-preventing agents such as amines and phenolic carboxylic acids; and dispersion stabilizers. When a particulate additive such as a pigment is added to the coating composition, it is preferable that the additive have an average particle diameter of not greater than 10 μm so as not to impair the spot weldability or press formability of the precoated steel sheet.

Of the above-described optional additives, addition of a color pigment is particularly advantageous when the precoated steel sheet has an organic composite coating on one side of the base sheet as is the case in most precoated steel sheets for use in automobile bodies. Since the organic composite coating formed according to the present invention is very thin and nearly colorless, it is difficult for a user to distinguish which side has the organic composite coating, and this fact interferes with easy handling of the precoated steel sheet by the user. Addition of a color pigment to the coating composition used to form a topcoat layer makes it easy to distinguish the coated side. Furthermore, when the color pigment is iron oxide, it is expected to be effective for improving the corrosion resistance, particularly in injured portions, and the spot weldability of the resulting precoated steel sheet.

Organic Solvent:

The above-described binder resin (A), hydrophilic resin (B), and silica particles (C), and optional additives including a lubricant, curing agent, and pigment are dissolved or dispersed in an organic solvent to form a coating composition for use in topcoating. The organic solvent should be selected from those

capable of dissolving all the resin components (A) and (B) and, if present, the curing agent together. Useful organic solvents include hydrocarbons such as n-hexane, kerosine, cyclohexane, benzene, toluene, and xylene; alcohols such as propanol, butanol, amyl alcohol, cyclohexanol, and benzyl alcohol; polyhydric alcohols and their derivatives such as ethylene glycol monoethyl ether (cellosolve), ethylene glycol monoethyl ether acetate (cellosolve acetate), ethylene glycol monobutyl ether (butyl cellosolve), ethylene glycol dibutyl ether, and diethylene glycol monoethyl ether; ethers and acetals such as 1,4-dioxane, furan, and diethyl acetal; and ketones such as methyl ethyl ketone, methyl isobutyl ketone, isophorone, and cyclohexanone. The solvent may also be an ester, fatty acid, or phenolic solvent, a nitrogen-, sulfur-, or phosphorus-containing solvent, or a halogenated hydrocarbon solvent, or a mixture of two or more of the above-listed solvents.

The coating composition can be applied onto the chromate film by conventional coating equipment such as a roll coater, bar coater, sprayer, or curtain flow coater to form an organic composite topcoat layer. The thickness of the topcoat layer after drying should be in the range of 0.2 - 6 $\mu$m and preferably 0.6 - 1.6 $\mu$m. A thickness of the organic topcoat layer of less than 0.2 $\mu$m is insufficient to provide good corrosion resistance, while a thickness of greater than 6 $\mu$m impairs the weldability of the precoated steel sheet.

After the coating composition is applied, the coating is dried by baking at a temperature of 80 - 300 °C resulting in the formation of the topcoat layer. As the baking temperature is increased, the curing reaction proceeds more rapidly and intensively and the resulting topcoat layer becomes stiffer and stronger. However, when the base steel sheet is of the bake-hardening type, the maximum baking temperature should be 200 °C since baking at a temperature higher than 200 °C cause a loss of bake-hardenability of the steel sheet. In this case, a more preferable baking temperature is in the range of 120 - 150 °C.

The resulting precoated steel sheet according to the present invention has a zinc or zinc-based alloy plating layer adjacent to the steel sheet, an undercoat chromate layer formed thereon, and an uppermost organic composite topcoat layer. Such a multi-layer coating can be applied on one side or both sides of the steel sheet, although a steel sheet for use in automobile bodies is usually coated with the multi-layer coating on only one side thereof.

The present invention will be further described by reference to the following example. It should be understood, however, that although the example describes in detail certain preferred components and/or conditions of the invention, it is given for purposes of illustration and the invention in its broader aspects is not limited thereto. All the parts and percents are by weight unless otherwise indicated.

## EXAMPLE

### Materials Used

(a) Base Plated Steel Sheets

Two types of base plated steel sheets both having a thickness of 0.8 mm were used in this example. One was a steel sheet having an electroplated zinc alloy (Zn-13% Ni) coating with a weight of 30 $g/m^2$ (abbreviated hereinafter as Zn-Ni) and the other was an alloyed galvanized steel sheet having a galvanized coating weight of 45 $g/m^2$ (abbreviated hereinafter as GA). The alloyed galvanized coating of GA contained 9% Fe at its surface. Also a 0.8 mm-thick cold-rolled steel sheet (abbreviated hereinafter as CR) was used as a base material for comparison. These steel sheets were degreased with an alkaline degreasing solution (Surfcleaner 155 manufactured by Nippon Paint) prior to use.

(b) Chromating solutions for Undercoating

i) No-Rinse (NR) Type Chromating Solution

To an aqueous chromic acid solution containing 120 g/l of $CrO_3$ was added a predetermined amount of ethylene glycol as a reducing agent and the mixture was heated for 6 hours at 80 °C to partially reduce the chromic acid. After cooling, an aqueous chromic acid was added in an amount sufficient to adjust the $Cr^{3+}/(Cr^{3+} + Cr^{6+})$ ratio to 0.5 and a sufficient amount of water was added to adjust the concentration of total chromium oxides expressed as the concentration of $CrO_3$ (abbreviated as $CrO_3$) to 40 g/l (=0.4 mol/liter).

Prior to use, glycerol was added in a concentration of 15 g/l as an additional reducing agent to prepare a no-rinse type chromating solution. Some of the chromating solutions used in this example contained one or more additives selected from aqueous colloidal silica having an average particle diameter of 20 nm, iron phosphide having an average particle diameter of 3 $\mu$m, and $\gamma$-glycidoxypropyl-

trimethoxysilane as a silane coupling agent. These additives were also added prior to use. The amounts of colloidal silica and iron phosphide added are expressed in terms of weight ratio relative to the total chromium oxides, i.e., as $SiO_2/CrO_3$ and $Fe_2P/CrO_3$, respectively, while the amount of silane coupling agent added is expressed in g/l (grams per liter) in Table 3.

ii) Electrolytic (EL) Type Chromating Solution

An aqueous solution containing 50 g/l of $CrO_3$ and 0.5 g/l of $H_2SO_4$ was used as a chromating solution. The electrolytic chromating was performed by cathodic electrolysis in the solution at 50 °C for 2 seconds with a current density of 5.0 A/$dm^2$ followed by water rinsing and drying.

(c) Organic Coating Composition for Topcoating

i) Preparation of Binder Resin (A)

(i-l) An epichlorohydrin-bisphenol A epoxy resin (number-average molecular weight: 1400, epoxy equivalent weight: 950, and bisphenol A content: 45 mole%) (475 parts) was dissolved in a mixture of 95 parts of xylol and 119 parts of cellosolve acetate and diethanolamine (53.5 parts, 0.5 moles) was added to the resulting solution and allowed to react for 6 hours at 145 °C until epoxy groups were no longer detected by infrared spectroscopy. Thereafter, 209 parts of xylol and 130 parts of methyl ethyl ketone were added, and the mixture was cooled to room temperature to give a varnish of a binder resin (A1) having a solids content of 49%.

(i-2) To a solution of an epichlorohydrin-bisphenol A epoxy resin (number-average molecular weight: 1400, epoxy equivalent weight: 950, and bisphenol A content: 45 mole%) (475 parts) dissolved in a mixture of 95 parts of xylol and 119 parts of cellosolve acetate, azelaic acid (39.2 parts, 0.21 moles) and diethanolamine (8.3 parts, 0.08 moles) were added and reacted for 6 hours at 145 °C until epoxy groups were no longer detected by infrared spectroscopy and the acid value of the solids reached 1.1 KOH mg/g. Thereafter, 209 parts of xylol and 130 parts of methyl ethyl ketone were added and the mixture was cooled to room temperature to give a varnish of a binder resin (A2) having a solids content of 49%.

(i-3) To a solution of isophorone diisocyanate (222 parts, 1 mole) dissolved in 222 parts of cellosolve acetate and heated to 80 °C, a solution of $\epsilon$-caprolactam (113 parts, 1 mole) in 113 parts of cellosolve acetate was added dropwise over 1 hour. After completion of the addition, the reaction mixture was kept for 3 hours at 80 °C to complete the reaction, resulting in the formation of a partially-blocked polyisocyanate having an isocyanate equivalent weight of 670.

To 1075.5 parts of the varnish of resin (A-2) obtained in (i-2) above, the partially-blocked polyisocyanate (55.9 parts, 0.08 males) and 118 parts of cellosolve acetate were added and reacted for 3 hours at 100 °C. Thereafter, 102 parts of isopropyl alcohol were added and the reaction mixture was cooled to room temperature to give a varnish of an urethanated epoxy ester binder resin (A3) having a solids content of 41%.

(i-4) Following the procedure described in (i-1) except that an epichlorohydrin-hydrogenated bisphenol A epoxy resin (number-average molecular weight: 1400, epoxy equivalent weight: 950, free from phenolic or aromatic hydroxyl groups) was used in place of the epichlorohydrin-bisphenol A epoxy resin, a varnish of a binder resin (A4) which was free from aromatic hydroxyl groups and had a solids content of 49% was obtained.

(i-5) Following the procedure described in (i-2) except that a mixture of 232 parts of an epichlorohydrin-bisphenol A epoxy resin (number-average molecular weight: 1400, epoxy equivalent weight: 950, and bisphenol A content: 45 mole%) and 243 parts of an epichlorohydrin-hydrogenated bisphenol A epoxy resin (number-average molecular weight: 1400, epoxy equivalent weight: 950, free from phenolic or aromatic hydroxyl groups) were used as an epoxy resin, a varnish of a binder resin (A5) which contained 20 mole% of moieties derived from an aromatic hydroxyl compound and had a solids content of 49% was obtained.

(i-6) Following the procedure described in (i-1) except that 125 parts of an epichlorohydrin-bisphenol A epoxy resin (number-average molecular weight: 470, epoxy equivalent weight: 250, and bisphenol A content: 43 mole%) were used as an epoxy resin which was reacted with 22.5 parts of dimethylamine as a secondary amine, a varnish of a binder resin (A6) having a solids content of 21% was obtained.

The proportion in mole percent of an aromatic hydroxyl compound in the total monomer reactants used in the preparation of each of the above-described binder resins and the number-average molecular weight thereof are shown in Table 1 below. As is apparent from Table 1, Resins A4 to A6 do not meet the requirements of a binder resin for use in the present invention.

TABLE 1

| Preparation No. | Resin No. | Mole% aromatic hydroxyl compound | Number-average molecular weight |
|---|---|---|---|
| i-1 | A1 | 39 | 1,600 |
| i-2 | A2 | 42 | 12,000 |
| i-3 | A3 | 37 | 13,000 |
| i-4 | A4 | None | 1,600 |
| i-5 | A5 | 20 | 12,000 |
| i-6 | A6 | 26 | 560 |

ii) Preparation of Hydrophilic Resins

(ii-1) A reaction vessel equipped with a dropping funnel, condenser, nitrogen inlet, thermometer, and agitating blade was charged with 351 parts of cellosolve acetate and heated to 120 °C. The dropping funnel was charged with 585 parts of glycidyl methacrylate and 13 parts of t-butylperoxy-2-ethyl hexanoate and the content of the dropping funnel was added dropwise over 3 hours at a constant rate at a temperature of 120 °C in a nitrogen atmosphere. After the addition was completed, the mixture was heated at 120 °C for an additional 30 minutes. Thereafter, a mixture of 49 parts of cellosolve acetate and 2 parts of t-butylperoxy-2-ethyl hexanoate was added dropwise over 1 hour at a constant rate at 120 °C in a nitrogen atmosphere and the mixture was further heated at 120 °C for 1 hour to complete the polymerization. A polyfunctional epoxy compound in solution (solids content: 59.8% and number-average molecular weight: 9,800) was thus obtained.

A reaction vessel equipped with a condenser, nitrogen inlet, thermometer, and agitating blade was charged with 602.1 parts of the polyfunctional epoxy compound solution prepared above and 185 parts of diethylamine and the reaction was allowed to proceed for 5 hours at 90 °C. Thereafter, 50 parts of xylene were added and the resulting solution was agitated for 30 minutes. Finally, the solution was diluted with xylene to 50% solids content to give a varnish of a polyamine resin (B1).

(ii-2) A reaction vessel equipped with a dropping funnel, condenser, nitrogen inlet, thermometer, and agitating blade was charged with 400 parts of xylene and heated to 130 °C. The dropping funnel was charged with 127 parts of styrene, 336 parts of methyl methacrylate, 45 parts of 2-hydroxyethyl methacrylate, 60 parts of n-butyl methacrylate, 26 parts of thioglycolic acid, and 6 parts of t-butylperoxy-2-ethyl hexanoate and the content of the dropping funnel was added dropwise over 3 hours at a constant rate at a temperature of 130 °C in a nitrogen atmosphere. After the addition was completed, the mixture was heated at 130 °C for another hour to give a carboxyl-containing acrylate prepolymer in solution having a solids content of 60.3%. The prepolymer had a number-average molecular weight of 2700, an acid value of 20.3 KOH mg/g, a hydroxyl (OH) value of 58, and a Tg of 68.4.

A reaction vessel equipped with a condenser, nitrogen inlet, thermometer, and agitating blade was charged with 602.1 parts of the polyfunctional epoxy compound solution prepared in (ii-1) and 166 parts of diethylamine and the reaction was allowed to proceed for 5 hours at 90 °C to form a polyamine resin. Thereafter, 996 parts of the acrylate prepolymer prepared above were added and the mixture was agitated for 3 hours at 90 °C to effect a graft polymerization reaction. A varnish of a grafted polyamine resin (B2) having a solids content of 64% was obtained. The grafted polyamine resin had a number-average molecular weight of 30,000 and contained 46% of the polyamine resin formed from monomer mixtures containing 47 mole% of an amine compound.

(ii-3) A reaction vessel equipped with two dropping funnels A and B, a condenser, a nitrogen inlet, a thermometer, and an agitating blade was charged with 800 parts of butyl acetate and heated to 120 °C. Dropping funnel A was charged with a mixture of 100 parts of dimethylaminoethyl acrylate, 200 parts of styrene, 300 parts of methyl methacrylate, and 200 parts of 2-ethylhexyl acrylate, while dropping funnel B was charged with a mixture of 80 parts of 4,4'-azobis(4-cyano) valerate, 320 parts of butanol, and 58 parts of triethylamine. Both the contents of dropping funnels A and B were added dropwise simultaneously over 3 hours at a temperature of 120 °C in a nitrogen atmosphere. After the addition was completed, the mixture was heated at 120 °C for an additional 30 minutes and a mixture of 8 parts of 4,4'-azobis(4-cyano) valerate, 32 parts of butanol, and 5.8 parts of triethylamine was then added dropwise from dropping funnel B over 30 minutes. Thereafter, the reaction mixture was aged for an hour at 120 °C, the solvent was removed under vacuum at 100 °C, and 945 parts of xylol were added to the residue. A solution of an acrylic copolymeric polyamine resin (B3) in xylol having a solids content of 50% was obtained. The copolymeric polyamine resin had a number-average

molecular weight of 2,000 and contained 9 mole% of moieties derived from an amine compound.

(ii-4) A reaction vessel equipped with an agitation blade and nitrogen inlet was charged with 1 mole of pyridine-2,6-dicarboxylic acid dichloride, 6 moles of ϵ-caprolactam, and an appropriate amount of pyridine as a hydrogen chloride-trapping agent and the mixture was allowed to react for 1 hour at 120 °C in a nitrogen atmosphere. Thereafter, the resulting reaction mixture was poured into a large amount of cold water to precipitate the reaction product, which was collected by filtration, washed with water and methanol successively, and dried under vacuum to give pyridinedicarbonyl biscaprolactam as grayish white powder.

To a melt of a mixture of 70% of substantially absolute ϵ-caprolactam and 30% of a polypropylene glycol having a molecular weight of 4,000 kept at 80 °C, sodium caprolactamate and the pyridinedicarbonyl biscaprolactam prepared above were added in amounts of 1 and 2 mole%, respectively, based on the amount of ϵ-caprolactam. Immediately after the addition, the mixture was poured into a mold kept at 140 °C and allowed to polymerize therein at that temperature. The polymerization was completed in about 6 minutes and a polypropylene glycol-modified nylon-6 resin (B4) was obtained.

The proportion in mole percent of an amine compound in the total monomer reactants used in the preparation of each of the above-described hydrophilic resins and the number-average molecular weight thereof are shown in Table 2 below along with the corresponding data of a commercially-available hydrophilic polyethyleneimine resin (SP-003 manufactured by Japan Catalytic Chemical Industry). As is apparent from Table 2, Resins B3, B4, and SP-003 do not meet the requirements of a hydrophilic resin for use in the present invention.

TABLE 2

| Preparation No. | Resin No. | Mole% amine compound used | Number-average molecular weight |
|---|---|---|---|
| ii-1 | B1 | 50 | 15,000 |
| ii-2 | B2 | 22*1 | 30,000 |
| ii-3 | B3 | 9 | 2,000 |
| ii-4 | B4 | Modified polyamine resin | -- |
| | SP-003 | 100 | 300 |

*1: a grafted polymer containing 47% of a polyamine resin which comprised 46 mole% of an amine compound.

iii) Preparation of Coating Compositions

One of the binder resins prepared above was added to cyclohexanone along with fumed silica as silica particle (Aerosil 300 manufactured by Nippon Aerosil, average primary particle diameter: 8 nm) and a polyethylene wax (manufactured by Hoechst AG, density: 0.95 - 0.97, molecular weight: 2,000, acid value: 0 KOH mg/g) and ground with a sand grinding mill. To the resulting dispersion, one of the above-described hydrophilic resins and a resol-type phenolic resin as a curing agent (BKS-316 manufactured by Showa High Polymer) were added and the mixture was diluted with cyclohexanone in such an amount that the resins and the curing agent were dissolved in the solvent and the resulting coating composition had a solids content and viscosity suitable for coating.

The composition of each of the coating compositions used to form an organic topcoat layer in the example which were prepared as above is also shown in Table 3.

(d) Preparation of Precoated Steel Sheets

A clean, degreased plated surface of one of the base steel sheet described above in (a) was coated with a no-rinse type chromating solution prepared above in (b) with various coating weights (as Cr) using a bar coater and baked at a sheet temperature of 140 °C for 30 seconds to form an undercoat chromate film. The sheet was allowed to cool to room temperature before it was subjected to the subsequent topcoating procedure.

Alternatively, the chromate film was formed by electrolytic chromate treatment. In this case, a clean, degreased plated surface of the base steel sheet was subjected to electrolytic chromate treatment under the conditions described in (b) above.

The resulting chromate film on the steel sheet was then coated with an organic resin coating composition prepared above in (c) with various coating weights using a bar coater and then dried and baked

at a sheet temperature of 140° C for 60 seconds to form a topcoat organic composite layer.

The resulting precoated steel sheets were evaluated with respect to corrosion resistance, electrodeposition coatability, chromium dissolution, and weldability according to the testing procedures described below.

(e) Testing Procedures

(i) Corrosion Resistance Test

The corrosion resistance of each precoated steel sheet was tested using three types of test pieces. Two were flat test pieces in which one was intact and the other had scribed cross lines on the duplex coating to a depth sufficient to reach the base steel. The other test piece was subjected to cup drawing with a diameter of 50 mm while the die shoulder was washed with trichloroethylene and ground with #120 emery paper before each cup drawing so as to give a constant surface roughness.

After these test pieces were immersed in an aqueous 2.5% solution of an alkaline degreasing agent (Surfcleaner SD 400 manufactured by Nippon Paint) at 43° C for two and a half minutes, washed with water, and then baked at 165° C for 25 minutes, they were subjected to an accelerated corrosion test with a 8 hour-cycle consisting of salt spraying for 4 hour, hot air drying at 60° C for 2 hours, and humidifying at 50° C and a relative humidity of 95% or higher for 2 hour.

For the intact flat and the cup-drawn test pieces, the corrosion resistance was evaluated after 200 cycles (1600 hours) by measuring the percent area on the flat test piece or on the side wall of the cup-drawn test piece which was covered by red rust. For the test piece having scribed cross lines, the corrosion resistance was evaluated by measuring the maximum width of red rust on either side from the scribed cross lines after 25 cycles (200 hours).

(ii) Electrodeposition Coatability Test

A test piece which had been degreased in the same manner as described for the corrosion resistance test was subjected to electrodeposition coating using an electrodeposition coating composition (Power Top U-600 manufactured by Nippon Paint) under such conditions that a 20 µm-thick coating was electrodeposited on a phosphated cold-rolled steel sheet and baked for 25 minutes at 165° C. The surface of the electrodeposited coating on the test piece was visually observed and the electrodeposition coatability was evaluated as follows:

◎ : smooth and uniform appearance,
O : good appearance with slight surface roughness,
△ : significantly rough surface or craters formed, and
X : many craters or incapable of electrodeposition.

(iii) Chromium Dissolution Test

A test piece was immersed in an aqueous solution containing 2.5% of an alkaline degreasing agent (Surfcleaner SD 400 manufactured by Nippon Paint) at 43° C for two and a half minutes and then in a zinc phosphating solution (Surfdyne DP 4000 manufactured by Nippon Paint) at 43° C for 2 minutes. After each immersion, the amount of chromium dissolved out into the immersing solution was determined based on the Cr amount remaining on the test piece which was measured before and after the immersion by fluorescent X-ray analysis.

(iv) Weldability Test

Two test pieces were laid one on another with the coated surface of one test piece facing the uncoated surface of the other test piece and spot welding was performed on these test pieces using an AC single spot welder and electrode tips each having a tip diameter of 6.0 mm under the following conditions: a welding current of 10,000 A, a weld time of 12 cycles, and welding force of 200 kgf. The weldability was evaluated in the following two respects A and B.

A. Stability of electrical conduction: After 1000 spots were welded, the indentations of 100 spots selected at random were visually observed as to whether they were stable (regular) or unstable (irregular). The results were evaluated as the number of spots having unstable indentations. Regular and irregular indentations are schematically shown in Figures 1(a) and 1(b), respectively.

B. Diameter of electrode tips: After welding of 1000 spots, the diameters of the electrode tips were measured by pressing them on a sheet of pressure-sensitive paper and were evaluated as follows:

O : less than 7.0 mm in diameter,
△ : 7.0 - 8.0 mm in diameter, and
X : greater than 8.0 mm in diameter.

The details of the base plated steel sheet, undercoat chromate layer and organic topcoat layer of each precoated steel sheet are shown in Table 3, while Table 4 shows the test results for these sheets.

It can be seen from the results shown in Table 4 that the precoated steel sheets having a chromate layer and an organic composite coating according to the present invention have not only good corrosion resistance but good electrodeposition coatability and spot weldability. They also have good resistance to chromium dissolution.

Furthermore, the organic topcoat layers of the precoated steel sheets of the present invention have good adhesion and have a very small thickness in the range of 0.2- 6 µm, so they have good formability and withstand relatively severe press forming such as hemming applied during the manufacture of automobile bodies.

As illustrated in the above example, the coating compositions used to form a topcoat layer can be prepared using an inexpensive common organic solvent for coating such as cyclohexanone and their viscosities are not significantly increased by addition of fine silica particles. Therefore, they can be easily handled to form a thin coating by application. Another economic advantage is the use of a less expensive hydrophilic resin, i.e., a polyamine and/or polyimine resin which is cheaper than a polyamide. Therefore, the precoated steel sheets of the present invention can be manufactured readily with low costs, yet they have excellent properties as evidenced above.

Although the present invention has been described with respect to preferred embodiments, it is to be understood that variations and modifications may be employed without departing from the concept of the invention as defined in the following claims.

TABLE 3 - 1 (This Invention Runs)

| Run No. | Base plated steel sheet | Type and composition of chromating solution | | | | | Composition of organic topcoating composition[1] and thickness of topcoat layer | | | | | | | | | | |
|---|---|---|---|---|---|---|---|---|---|---|---|---|---|---|---|---|---|
| | | Type | Silica ($SiO_2/CrO_3$) | Iron phosphide ($Fe_2P/CrO_3$) | Coupling agent (g/ℓ) | Weight as Cr ($mg/m^2$) | Binder resin Type | Binder resin Amount | Hydrophilic resin Type | Hydrophilic resin Amount | Silica | Curing agent | Wax | Other additives Type | Other additives Amount | Solvent | Thickness (μm) |
| 1 | Zn−Ni | NR[2] | 0 | 0 | 0 | 70 | A3 | 100 | B1 | 53 | 44 | 25 | 6 | — | — | Cyclo-hexanone | 1.3 |
| 2 | 〃 | 〃 | 1 | 〃 | 〃 | 〃 | 〃 | 〃 | 〃 | 〃 | 〃 | 〃 | 〃 | — | — | 〃 | 〃 |
| 3 | 〃 | 〃 | 〃 | 3 | 〃 | 〃 | 〃 | 〃 | 〃 | 〃 | 〃 | 〃 | 〃 | — | — | 〃 | 〃 |
| 4 | 〃 | 〃 | 〃 | 〃 | 10 | 〃 | 〃 | 〃 | 〃 | 〃 | 〃 | 〃 | 〃 | — | — | 〃 | 〃 |
| 5 | 〃 | 〃 | 〃 | 〃 | 〃 | 30 | 〃 | 〃 | 〃 | 〃 | 〃 | 〃 | 〃 | — | — | 〃 | 〃 |
| 6 | 〃 | 〃 | 〃 | 〃 | 〃 | 100 | 〃 | 〃 | 〃 | 〃 | 〃 | 〃 | 〃 | — | — | 〃 | 〃 |
| 7 | 〃 | EL[3] | — | — | — | 〃 | 〃 | 〃 | B2 | 116 | 44 | 25 | 6 | — | — | 〃 | 〃 |
| 8 | GA | NR[2] | 1 | 3 | 10 | 70 | 〃 | 〃 | 〃 | 〃 | 〃 | 〃 | 〃 | — | — | 〃 | 〃 |
| 9 | 〃 | 〃 | 〃 | 〃 | 〃 | 〃 | A2 | 〃 | 〃 | 〃 | 〃 | 〃 | 0 | $Fe_2P$ powder | 200 | 〃 | 6.0 |
| 10 | Zn−Ni | 〃 | 〃 | 〃 | 〃 | 〃 | A1 | 〃 | 〃 | 〃 | 〃 | 〃 | 6 | — | — | 〃 | 1.3 |
| 11 | 〃 | 〃 | 〃 | 〃 | 〃 | 〃 | A2 | 〃 | 〃 | 〃 | 〃 | 〃 | 〃 | — | — | 〃 | 〃 |
| 12 | 〃 | 〃 | 〃 | 〃 | 〃 | 〃 | A3 | 〃 | 〃 | 〃 | 〃 | 〃 | 〃 | — | — | 〃 | 〃 |
| 13 | 〃 | 〃 | 〃 | 〃 | 〃 | 〃 | 〃 | 〃 | 〃 | 〃 | 〃 | 〃 | 0 | — | — | 〃 | 〃 |
| 14 | 〃 | 〃 | 〃 | 〃 | 〃 | 〃 | 〃 | 〃 | 〃 | 〃 | 〃 | 0 | 6 | — | — | 〃 | 〃 |
| 15 | 〃 | 〃 | 〃 | 〃 | 〃 | 〃 | 〃 | 〃 | 〃 | 〃 | 〃 | 25 | 〃 | — | — | 〃 | 0.8 |
| 16 | 〃 | 〃 | 〃 | 〃 | 〃 | 〃 | A2 | 〃 | 〃 | 〃 | 〃 | 〃 | 0 | $Fe_2P$ powder | 200 | 〃 | 5.0 |
| 17 | 〃 | 〃 | 〃 | 〃 | 〃 | 〃 | A3 | 〃 | 〃 | 〃 | 30 | 〃 | 6 | $Fe_2O_3$ pigment | 30 | 〃 | 1.3 |
| 18 | 〃 | 〃 | 〃 | 〃 | 〃 | 〃 | 〃 | 〃 | 〃 | 〃 | 〃 | 〃 | 〃 | $BaCrO_4$ | 40 | 〃 | 〃 |

1) Parts by weight based on the total solids content; 2) No-rinse type; 3) Electrolytic type.

TABLE 3 - 2 (Comparative Runs)

| Run No. | Base plated steel sheet | Type and composition of chromating solution | | | | | Composition of organic topcoating composition[1] and thickness of topcoat layer | | | | | | | | | | |
|---|---|---|---|---|---|---|---|---|---|---|---|---|---|---|---|---|---|
| | | Type | Silica ($SiO_2/CrO_3$) | Iron phosphide ($Fe_2P/CrO_3$) | Coupling agent (g/ℓ) | Weight as Cr ($mg/m^2$) | Binder resin | | Hydrophilic resin | | Silica | Curing agent | Wax | Other additives | | Solvent | Thickness (μm) |
| | | | | | | | Type | Amount | Type | Amount | | | | Type | Amount | | |
| C-1 | CR * | NR[2] | 1 | 3 | 10 | 70 | A3 | 100 | B2 | 116 | 44 | 25 | 6 | — | — | Cyclo-hexanone | 1.3 |
| C-2 | Zn-Ni | — | — | — | — | 0* | 〃 | 〃 | 〃 | 〃 | 〃 | 〃 | 〃 | — | — | 〃 | 〃 |
| C-3 | 〃 | NR[2] | 1 | 3 | 10 | 70 | A4* | 〃 | 〃 | 〃 | 〃 | 〃 | 〃 | — | — | 〃 | 〃 |
| C-4 | 〃 | 〃 | 〃 | 〃 | 〃 | 〃 | A3 | 〃 | B3* | 53 | 〃 | 〃 | 〃 | — | — | 〃 | 〃 |
| C-5 | 〃 | 〃 | 〃 | 〃 | 〃 | 〃 | 〃 | 〃 | SP * -003 | 〃 | 〃 | 〃 | 〃 | — | — | 〃 | 〃 |
| C-6 | 〃 | 〃 | 〃 | 〃 | 〃 | 〃 | 〃 | 〃 | B4* | 42 | 31 | 〃 | 10 | — | — | NMP[4] | 〃 |
| C-7 | 〃 | 〃 | 〃 | 〃 | 〃 | 〃 | A5* | 〃 | B2 | 116 | 44 | 〃 | 6 | — | — | Cyclo-hexanone | 〃 |
| C-8 | 〃 | 〃 | 〃 | 〃 | 〃 | 〃 | A6* | 〃 | 〃 | 〃 | 〃 | 〃 | 〃 | — | — | 〃 | 〃 |
| C-9 | 〃 | 〃 | 〃 | 〃 | 〃 | 〃 | — | — | — | — | — | — | — | — | — | — | 0 * |
| C-10 | 〃 | 〃 | 〃 | 〃 | 〃 | 〃 | A3 | 〃 | B2 | 116 | 44 | 25 | 6 | — | — | Cyclo-hexanone | 10.0* |
| C-11 | 〃 | 〃 | 〃 | 〃 | 〃 | 〃 | 〃 | 〃 | 〃 | 〃 | 0* | 〃 | 〃 | — | — | 〃 | 1.3 |

* Outside the range defined herein.
1) Parts by weight based on the total solids content; 2) No-rinse type;
4) N-methyl-2-pyrrolidone.

TABLE 4 - 1 (Test Results of This Invention Runs)

| Run No. | Corrosion Resistance: Flat (% Red rusted area) | Corrosion Resistance: Cup draw (% Red rusted area) | Corrosion Resistance: Scribed Max. width of red rust | Electro-deposit. coat-ability | Dissolved Cr ($mg/m^2$): Degreas-ing solution | Dissolved Cr ($mg/m^2$): Zinc phosphating solution | Spot weldability: Stabi-lity | Spot weldability: Elctrode diameter | Spot weldability: Over-all rating |
|---|---|---|---|---|---|---|---|---|---|
| 1 | 1~2 | 2~3 | 1.9 | ○ | 0.3 | 0.5 | 0/100 | ○ | ○ |
| 2 | 0~1 | 1~2 | 1.6 | ◎ | 0.4 | 0.4 | 0/100 | ○ | ○ |
| 3 | 0~1 | 2 | 1.3 | ◎ | 0.7 | 0.3 | 0/100 | ○ | ○ |
| 4 | 0 | 1 | 1.5 | ◎ | 0.5 | 0.3 | 0/100 | ○ | ○ |
| 5 | 1~2 | 3 | 2.0 | ◎ | 0.2 | 0.1 | 0/100 | ○ | ○ |
| 6 | 0 | 0 | 1.1 | ◎ | 0.9 | 0.7 | 0/100 | ○ | ○ |
| 7 | 2~3 | 7~8 | 2.8 | ◎ | 0.1 | 0 | 0/100 | ○ | ○ |
| 8 | 0 | 0~1 | 0.8 | ◎ | 0.2 | 0.5 | 0/100 | ○ | ○ |
| 9 | 1~2 | 2~3 | 0.9 | ○ | 0.8 | 0.5 | 1/100 | ○~△ | ○~△ |
| 10 | 0 | 0 | 1.2 | ◎ | 0.7 | 0.3 | 0/100 | ○ | ○ |
| 11 | 0~1 | 0~1 | 1.2 | ◎ | 0.6 | 0.5 | 0/100 | ○ | ○ |
| 12 | 0 | 0~1 | 1.0 | ◎ | 0.5 | 0.4 | 0/100 | ○ | ○ |
| 13 | 0~1 | 2~4 | 2.0 | ◎ | 0.4 | 0.5 | 0/100 | ○ | ○ |
| 14 | 1~2 | 3 | 1.5 | ◎ | 0.8 | 0.7 | 0/100 | ○ | ○ |
| 15 | 1~2 | 2~3 | 1.8 | ◎ | 0.9 | 0.4 | 0/100 | ○ | ○ |
| 16 | 0 | 1~2 | 1.0 | ○ | 0.5 | 0.7 | 1/100 | ○~△ | ○~△ |
| 17 | 0 | 1~2 | 0.8 | ◎ | 0.6 | 0.5 | 0/100 | ○ | ○ |
| 18 | 0 | 0 | 0.5 | ◎ | 1.0 | 1.8 | 0/100 | ○ | ○ |

TABLE 4 - 2 (Test Results of Comparative Runs)

| Run No. | Corrosion Resistance: Flat % Red rusted area | Corrosion Resistance: Cup draw % Red rusted area | Corrosion Resistance: Scribed Max. width of red rust | Electro-deposit. coat-ability | Dissolved Cr ($mg/m^2$): Degreas-ing solution | Dissolved Cr ($mg/m^2$): Zinc phosphating solution | Spot weldability: Stabi-lity | Spot weldability: Elctrode diameter | Spot weldability: Over-all rating |
|---|---|---|---|---|---|---|---|---|---|
| C-1 | 100 | 100 | Whole area | ◎ | 1.5 | 1.1 | 0/100 | ○ | ○ |
| C-2 | 100 | 100 | >10 | ◎ | 0 | 0 | 0/100 | ○ | ○ |
| C-3 | 20 | 90 | 7.5 | ○ | 0.9 | 0.6 | 0/100 | ○ | ○ |
| C-4 | 0 | 1 | 1.5 | △ | 0.5 | 0.4 | 0/100 | ○ | ○ |
| C-5 | 5 | 7~8 | 2.6 | △ | 0.8 | 0.9 | 0/100 | ○ | ○ |
| C-6* | 0 | 1~2 | 1.8 | ◎ | 0.8 | 0.4 | 0/100 | ○ | ○ |
| C-7 | 20 | 85 | >10 | ○ | 0.6 | 0.8 | 0/100 | ○ | ○ |
| C-8 | 30 | 90 | >10 | △ | 1.5 | 0.9 | 2/100 | ○~△ | ○~△ |
| C-9 | 100 | 100 | Whole area | ◎ | 10.6 | 8.9 | 0/100 | ○ | ○ |
| C-10 | 0 | 5 | 1.9 | × | 0.1 | 0 | Failure | — | × |
| C-11 | 20 | 75 | 8.5 | △ | 0.7 | 0.5 | 0/100 | ○ | ○ |

* The coating composition was highly viscous and difficult to handle for coating.

## Claims

1. A precoated steel sheet having good corrosion resistance and electrodeposition coatability, which comprises a zinc- or zinc alloy-plated steel sheet having on the plated surface on one or both sides of the steel sheet an undercoat chromate layer and an organic topcoat layer, wherein the topcoat layer is a dry film of an organic composite coating having a thickness of 0.2 - 6 µm and formed from a coating composition comprising the following components A, B, and C in an organic solvent:

   A. 100 parts by weight of an organic solvent-soluble binder resin having a number-average molecular weight of 600 - 100,000 and formed from one or more monomers at least 25 mole% of which are comprised of an aromatic hydroxy compound,

   B. a hydrophilic resin having a number-average molecular weight of 600 - 100,000 which is either (i) from 10 to 150 parts by weight of a hydrophilic polyamine and/or polyimine resin formed from one or more monomers at least 25 mole% of which are comprised of an amine compound, or (ii) an

amount of a grafted polyamine and/or polyimine resin which is a graft polymer of a hydrophilic polyamine and/or polyimine resin (i) onto a binder resin (A) or other resin which is compatible with a binder resin (A), said amount of the grafted resin being in the range of from 10 to 150 parts by weight multiplied by the quotient of the total weight of the grafted resin divided by the weight of the polyamine and/or polyimine resin moieties in the grafted resin; and
C. from 5 to 150 parts by weight of silica particles having an average primary particle diameter of 1 - 100 nm.

**2.** The precoated steel sheet of Claim 1, wherein the undercoat chromate layer is a chromate film formed from a no-rinse type chromating solution.

**3.** The precoated steel sheet of Claim 2, wherein the chromate film is formed by the two-stage reduction method using a partially-reduced chromating solution.

**4.** The precoated steel sheet of Claim 2 or 3, wherein the chromating solution contains, in addition to chromic acid and a reducing agent, one or more additives selected from the group consisting of silane coupling agents, phosphoric acid, iron phosphide, and colloidal silica.

**5.** The precoated steel sheet of any one of Claims 1 to 4, wherein the chromate layer has a coating weight of 5 - 500 $mg/m^2$ as Cr.

**6.** The precoated steel sheet of any one of Claims 1 to 5, wherein the hydrophilic resin (B) is selected from the group consisting of those polyamine and polyimine resins containing amino or imino groups present in side chains and the grafted polyamine and polyimine resins.

**7.** The precoated steel sheet of any one of Claims 1 to 6, wherein the silica particles (C) are fumed silica.

**8.** The precoated steel sheet of any one of Claims 1 to 7, wherein the coating composition used to form the topcoat layer further contains one or more additives selected from the group consisting of lubricants, curing agents, pigments, and rust-preventing agents.

**9.** The precoated steel sheet of any one of Claims 1 to 8, wherein the base steel sheet is of the bake-hardening type and both the undercoat and topcoat layers are formed by baking at a temperature below 200°.

**10.** In a method of electrodeposition coating of a steel sheet, the improvement wherein the steel sheet is a precoated steel sheet as defined in any one of Claims 1 to 9.

FIG. 1

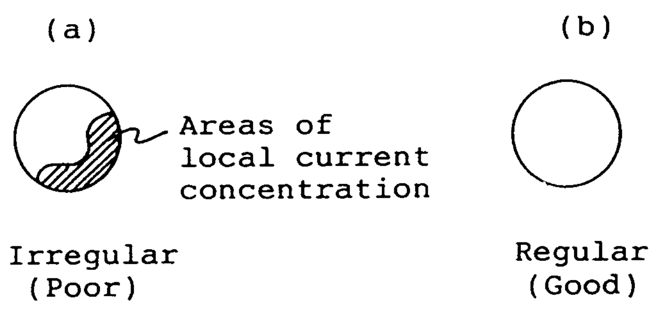
(a)
Areas of
local current
concentration
Irregular
(Poor)
(b)
Regular
(Good)

European Patent Office

# EUROPEAN SEARCH REPORT

Application Number

EP 91 11 5588

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E | EP-A-0 448 341 (NIPPON PAINT CO.LTD.)<br>* the whole document * | 1-10 | B05D7/16<br>C09D5/08<br>C09D201/00<br>C23C22/30 |
| E | WORLD PATENTS INDEX LATEST<br>Week 03, 1992<br>Derwent Publications Ltd., London, GB;<br>AN 92-020228<br>& JP-A-3 268 939 (SUMITOMO METAL INC. & NIPPON PAINT K.K.) 29 November 1991<br>* abstract * | 1-10 | |
| Y | WORLD PATENTS INDEX LATEST<br>Week 37, 1984<br>Derwent Publications Ltd., London, GB;<br>AN 84-228116<br>& JP-A-59 135 258 (YAHIRO KOYU K.K.)<br>* abstract * | 1-10 | |
| Y | EP-A-0 308 563 (SUMITOMO METAL IND.)<br>* the whole document * | 1-10 | |
| A | EP-A-0 380 024 (NIPPON STEEL CORP.)<br>* the whole document * | 1-10 | TECHNICAL FIELDS SEARCHED (Int. Cl.5) |
| A | EP-A-0 385 362 (KAWASAKI STEEL CORPORATION)<br>* the whole document * | 1-10 | C09D<br>B05D<br>C23C |
| A | FR-A-2 173 210 (E.I. DU PONT DE NEMOURS AND CO.)<br>* claims; examples * | 1 | |
| A | EP-A-0 199 346 (ENVIRO-CHEMIE A.G.)<br>* the whole document * | 1 | |

The present search report has been drawn up for all claims

| Place of search | Date of completion of the search | Examiner |
|---|---|---|
| THE HAGUE | 22 MAY 1992 | BROTHIER J-A.L. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document